# EUROPEAN PATENT APPLICATION

(11) **EP 0 537 390 A1**
(43) Date of publication of application: **21.04.1993**
(21) Application number: 91309539.4
(22) Date of filing: 16.10.1991
(51) Int. Cl.: G02C 3/00

(54) **A device for supporting spectacles**

(71) Applicant: Penney, George, Bollington, Macclesfield, Cheshire SK10 5JQ (GB)
(72) Inventor: Penney, George, Bollington, Macclesfield, Cheshire SK10 5JQ (GB)
(74) Representative: Ajello, Michael John

(57) **Abstract**

A device for supporting spectacles comprises a preformed plastics coated wire (15) which is substantially non-flexibly attachable by means of resilient sleeves (14) to the side arms or temple members (12, 13) of the spectacles. By location behind the wearer's head, the device supports the spectacles and prevents the bridge (16) of the frame (11) from resting uncomfortably on the bridge of the wearer's nose.

## Description

THIS INVENTION concerns a device for supporting spectacles to prevent them from resting uncomfortably on the bridge of the wearer's nose.

It is a common problem with spectacle wearers that the bridge part of the spectacle frame is designed to rest upon the bridge of the wearer's nose, often leading to considerable discomfort when the spectacles are worn continuously or for long periods. Many devices, some quite complex, have been designed in an attempt to relieve this problem but many of these serve only to transfer the discomfort from the nose to the ears. Also, for reasons of appearance, any devices which are complex and perhaps cumbersome in design are not really acceptable to many wearers.

An object of the present invention is to provide a device for supporting spectacles, wherein the aforementioned disadvantages are substantially overcome.

According to the present invention there is provided a device for supporting spectacles to prevent them from resting uncomfortably on the bridge of the wearer's nose, comprising an auxiliary retaining member attachable substantially non-flexibly to and extending between the side arms or temple members of the spectacles frame adjacent the wearer's ears thus to extend over and/or behind the wearer's head and to be supported thereby.

An embodiment of the invention will now be described, by way of example only, with reference to the accompanying drawings in which:-
Fig. 1 is a side view of a pair of spectacles having attached thereto a device made in accordance with the invention;
Fig. 2 is a partial rear view thereof; and
Fig. 3 is a partial plan view thereof;

Referring now to the drawings, there is shown a pair of spectacles comprising lenses 10 mounted in a frame 11 having side arms or temple members 12 at the free ends of which are retaining pieces 13 which locate behind the ear in the usual manner.

Resiliently engaged upon each of the retaining members 13 is a rubber or like sleeve 14 having a pair of parallel apertures, one to receive the retaining members 13 and the other for location of an auxiliary retaining member 15.

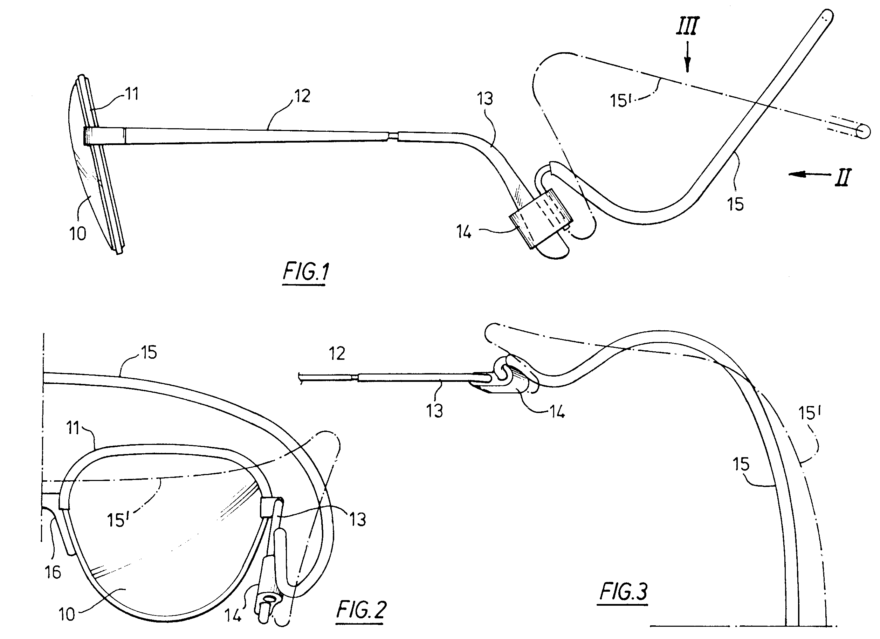

The member 15 is essentially provided in the form of a preformed plastics coated wire which is adapted to pass over and/or behind the wearer's head between the two retaining members 13 of the spectacles. As can be seen clearly from Fig. 1, the free ends of the member 15 are maintained within and by the sleeves 14. At least a part of the thickness of the plastics coating on the member 15 is cut away at the free ends for ease of insertion of the wire into the sleeves.

The substantially non-flexible attachment of the member 15 and its angular formation, are such that its central region locates gently against the back of the head and is supported thereby to prevent the bridge 16 of the spectacle frame 11 from sitting upon the bridge of the wearer's nose. In effect, the wearer's head, instead of the nose, supports the spectacles.

Since the apertures in the sleeves 14 extend completely through the latter, the member 15 may be removed and replaced in an upside down mode so that it assumes the position shown in dotted lines 15' in the drawings. This places the central region of the member at a lower position on the head.

Since the member 15 is constructed from preformed wire which is further deformable, the wearer may adjust its configuration for maximum comfort and support and to fit different head sizes. The member 15 is sufficiently slim for it to be substantially concealed beneath the wearer's hair.

It will be appreciated that the device is light in weight and unobtrusive and can be very readily removed from the spectacles when not required. Accordingly, the device represents an aesthetically attractive prospect for the wearer rendering it considerably more acceptable than many conventional devices for this purpose.

It is not intended to limit the invention to the above example only. For example, the member 15 may be, at least in part, strip-like instead of a narrow rod or wire, and/or may be constructed of a resilient plastics material.

If required, the member 15 may include a part which is adjustable in length to provide a good fit upon the wearer's head.

The device, including the sleeves 14 may be produced in many different materials and may be brightly coloured for aesthetic purposes.

The sleeves 14 may be attached permanently to the member 15 and, in the case of plastics, may be integrally moulded therewith.

The curvature, at least in one plane, of the major part of the auxiliary retaining member 15, between those end parts thereof of increased curvature, is or approximates to a quarter of the circumference of a circle. This curvature has been found to maximise the rigidity of the member 15 and to prevent as far as possible its enlargement in use, and thus in turn, avoid undue stress or the hinges of the spectacles.

## Claims

1. A device for supporting spectacles to prevent them from resting uncomfortably on the bridge of the wearer's nose, comprising an auxiliary retaining member attachable substantially non-flexibly to and extending between the side arms or temple members of the spectacles frame adjacent the wearer's ears thus to extend over and/or behind the wearer's head and to be supported thereby.

2. A device according to Claim 1, wherein said auxiliary retaining member comprises a preformed member which is removably attachable by means of a pair of resilient sleeves, to the spectacles and whose position thereon may be reversed thus to select the height at which the auxiliary retaining member may extend over the wearer's head.

3. A device according to Claim 2, wherein said resilient sleeves have apertures adapted to receive the free end regions of the side arms or temple members of the spectacles.

4. A device according to Claim 2, wherein said auxiliary retaining member has its free ends removably located within apertures within said sleeves and is reversible such that it may be attached thereto in an upside down mode thus to select the position of the auxiliary member where it extends over and/or behind the wearer's head.

5. A device according to any preceding claim, wherein said auxiliary retaining member is made from plastics coated deformable wire.

6. A device according to any one of Claims 1 to 4, wherein said auxiliary retaining member is made entirely from plastics.

7. A device according to Claim 6, wherein said resilient sleeves are integrally formed with said auxiliary retaining member.

8. A device according to Claim 1, wherein the auxiliary retaining member has, at least in one plane, a curvature which is or approximates to a quarter of the circumference of a circle, thus to maximise its rigidity.
